Europäisches Patentamt

European Patent Office

Office européen des brevets

(19)

(11) Publication number: **0 084 249**
**A2**

(12) # EUROPEAN PATENT APPLICATION

(21) Application number: **82306871.3**

(22) Date of filing: **22.12.82**

(51) Int. Cl.³: **B 25 J 9/00**
**B 25 J 11/00, B 25 J 17/02**

(30) Priority: **15.01.82 GB 8201085**
**12.05.82 GB 8213763**

(43) Date of publication of application:
**27.07.83 Bulletin 83/30**

(84) Designated Contracting States:
**BE DE FR IT NL SE**

(71) Applicant: **THE MARCONI COMPANY LIMITED**
**The Grove Warren Lane**
**Stanmore Middlesex HA7 4LY(GB)**

(72) Inventor: **Blount, Eric Albert**
**29 Tabors Avenue**
**Great Baddow Chelmsford Essex(GB)**

(74) Representative: **Hooper, John Peter Lindesay et al,**
**The General Electric Company p.l.c. Central Patent**
**Department (Chelmsford Office) Marconi Research**
**Centre West Hanningfield, Great Baddow**
**Chelmsford Essex CM2 8HN(GB)**

(54) Mechanical actuator for an industrial robot.

(57) The invention provides in one aspect an arm-like actuator mechanism for a robot, which mechanism comprises: a baseplate (21); a pedestal (12) pivotally mounted on the baseplate for pitching movement, and means for so moving it incorporating an adjustable support prop (13) mounted to the rear of the pedestal and extending between joints (31, 26) on the pedestal and on the baseplate; and a boom (14) pivotally and swivellably mounted at the free end of the pedestal for pitching and yawing movement, and means for so moving it incorporating two adjustable support struts (15a, b) mounted one either side of the pedestal and each extending between joints (61, 62a, b) on the boom and on the pedestal.

The invention also provides a wrist-like 3-axis joint arrangement (16) suitable for use in the manipulator apparatus of a robot having an arm-like boom (14), the arrangement comprising: a first, or forearm, portion (41) mountable upon the robot's boom for rotation about a first axis (150); a second, or hand, portion (42) mounted on the forearm for pivotal movement in a plane coplanar with the forearm's rotational axis and about a second axis (160) normal to and intersecting the forearm's rotational axis; and a third, or tool-carrier, portion (43) mounted on the hand for rotation about a third axis (170) normal to the hand's pivot axis and intersecting the forearm's rotational axis; and wherein all three axes intersect at a point (151), and the three portions are drivingly connected to drive members (themselves connectable to drive means whereby each portion may individually be driven around its movement axis), the drive members comprising a combination of inner, middle and outer drive shafts all co-axial with and rotatable about the forearm's rotational axis.

EP 0 084 249 A2

MECHANICAL ACTUATORS

This invention relates to mechanical actuators, and concerns in particular mechanisms useful as the, or part of the, structure of a robot or other automatic machinery.

On many occasions it is desirable that a physical action be performed by automatic equipment. One such occasion is during the welding together of parts of some object (such as a car body) borne upon a carrier moving past a welding station, when the machinery effecting the welding should be able to locate the object, identify the seam to be welded, and then quickly and accurately weld the seam before the object moves on past the welder. That portion of the machinery involved in physically positioning the welding tool (or any other tool being used) is referred to herein as the actuator mechanism.

The design of the actuator mechanisms of present automatic welding equipment (and other handling equipment of this type) tends to be based upon that of the human arm. The mechanism has equipment holding means (often a grasping device analogous to the human hand) attached by a first joint (a "wrist") to a first elongate member (a "fore-arm") itself attached, either directly or via a second joint (an "elbow") to a elongate extender member (an "upper arm"), by a third joint (a "shoulder") to the body of the machine which itself may be mounted by a fourth joint (a "waist") on the floor. However, while the human arm is a superb piece of manipulative machinery, its available robot imitations are not; indeed, it has become evident that the presently-used "humanoid" robot structures of this general type are far from ideal for the task, particularly when they are to be used in equipment for rapid and accurate operations, such as welding a thin seam between two overlapping or abutting parts of a car body.

These present-day structures are deficient in stiffness (both structural and servomechanical) and dynamic control, and thus an alternative approach is required to produce a suitable actuator mechanism.

The present invention seeks to provide just such an alternative design of actuator, which design, while retaining parts analogous to the human arm, nevertheless embodies the desirable features of a rigid structure triangulated as much as possible to obtain maximum stiffness, and (in a preferred aspect) driving motors which are themselves mounted near the tool carried by the actuator.

In a first aspect this invention provides an arm-like actuator mechanism for a robot, which mechanism comprises:

a baseplate (or "body" mounting);

a pedestal (or upper arm portion) pivotally mounted (by a "shoulder" joint) on the baseplate for fore and aft pitching movement, and means for so moving it incorporating an adjustable support prop mounted to the rear of the pedestal and extending between a joint on the pedestal and a joint on the baseplate; and

a boom (or lower arm portion) pivotally and swivellably mounted (by an "elbow" joint) at the free end of the pedestal for up and down pitching movement and side to side yawing movement, and means for so moving it incorporating two adjustable support struts mounted one either side of the pedestal and each extending between a two-axis joint on the boom and a two-axis joint on the side of the pedestal.

The actuator mechanism of the invention comprises a boom-carrying pedestal pivotally mounted upon a baseplate. If the whole structure is likened to the human arm, then the baseplate and its associated joints corresponds to the human shoulder; the combination is the mounting by which the upper arm portion (the pedestal) is attached to the body (whatever further structure the baseplate is secured to). In the most general case the baseplate is merely a platform for the pedestal (and its support prop), carrying the relevant portions of the pivot joints by which the pedestal and prop are mounted thereon - and, as is discussed further hereinafter, for accommodating the preferred "wide" pedestal there will be two spaced pivot joints, so that there are in all three such joints, their pivot axes parallel, arranged at the apices of an isosceles triangle. Such a mere platform base will in use simply be safely secured to the ground at the worksite. However, in a more advantageous embodiment the baseplate is not just a platform, but is instead part of the positioning machinery of the actuator mechanism, being itself mounted for rotary movement about an axis normal to the plane of the baseplate (and thus, in use, vertical - if the baseplate is floor mounted). Such a rotatably-mounted-baseplate is convenient not so much in order to increase the volume in which the mechanism operates (although it could be used, with appropriate control equipment, for this sort of re-positioning) but mainly in order to allow the mechanism rapidly to be withdrawn from the working volume at one end stop of the range of movement of the baseplate to a "safe" position, out of harms way, at the other end stop. Preferably, therefore, the baseplate is mounted for rotation between end stops, and has associated drive means for causing it so to rotate as and when required.

The boom-carrying upper-arm-like pedestal of the actuator mechanism of the invention is conveniently a single rigid inextensible pillar-like member having significant width (the dimension in a direction normal to the pedestal's pitching plane). It is pivotally mounted at its end upon the baseplate for pitching movement in a fore-and-aft plane (and is generally incapable of any twisting movement, or of any movement in any lateral plane), and conveniently it has the relevant portions of two such pivot joints positioned spaced across its width, one on either side at the end. As is discussed further hereinafter, such an arrangement (a wide pedestal with two spaced joints) results in the combination of the pedestal and its support prop having a tripod structure; this provides the desired high stability and structural stiffness.

The pedestal has an adjustable support prop mounted to the rear between the pedestal and the baseplate. The support prop is adjustable in length, and thus the pedestal may as required be caused to pitch in a fore-and-aft plane as the prop is made longer (fore) or shorter (aft). The support prop may be driven by some form of pneumatic or hydraulic system, but more preferably (because it forms a more rigid, more controllable arrangement) it is a screw jack mechanism, conveniently a simple one of the type with a constant length threaded rod which turns about its long axis so as to screw into and out of a stationary (non-rotating) socket at one end and thus alter the length of the portion between the socket and the other end; if the socket and the other end are secured to respectively the pedestal and baseplate then the threaded rod becomes an adjustable prop whose effective length can be changed as desired to cause the pedestal to pitch in the fore-and-aft plane. With such a screw jack adjustable prop it is convenient if the socket (into which the threaded rod screws) is pivotally mounted on the pedestal, the projecting free end of the rod extending into a recess within the pedestal, while the "fixed" end of the rod is rotatably secured to the pivot joint on the baseplate. Naturally, there is driving means associated with the adjustable prop. In order to keep the driven weight of the actuator mechanism to a minimum, it is preferred that this driving means be mounted in effect on the prop's baseplate pivot joint.

The support prop's two pivot joints, one on the pedestal and the other on the baseplate, are naturally each spaced from the pedestal pitching pivot axis in order that there should be sufficient movement to enable the prop to extend or contract, so pitching the pedestal, without the need to use excessive force. In each case the absolute spacing is dependent mostly upon the size of the mechanism, but the relative spacing is conveniently such that the two prop pivots are equidistant from the pedestal pitching pivot joint, and the pedestal prop pivot is roughly halfway along the pedestal. And in a particularly preferred embodiment the pedestal prop's pivot axis is considerably offset to the rear - so that the line joining the pedestal's prop and pitching joint axes is at a good $20^{\circ}$ to $30^{\circ}$ to the line of the pedestal itself - so further improving the leverage available when (as will normally be the case) the pedestal is leaning in the fore direction.

At the free end of the pedestal there is mounted, extending to the fore, a lower-arm-like boom (a rigid, preferably inextensible, non-twistable pole-like member). The boom is mounted both pivotally (for up-and-down pitching movement) and swivellably (for side-to-side yawing movement), and the mounting itself may be any conventional two-axis joint allowing such movements. It is the purpose of the boom to carry the manipulating apparatus, and its drive means, to be used by the robot having the actuator mechanism of the invention; in one preferred form (as discussed in more detail hereinafter) such a robot has its manipulating apparatus mounted at the fore end of the boom and the drives therefor mounted at the aft end. A particularly convenient such arrangement connects the drive means to the manipulating apparatus via a system of torsionally stiff tubes mounted coaxially one within the next for rotation about the common axis;

thus, the boom itself is preferably a hollow tube, conveniently of circular cross-section, within which the drive means tubes nest co-axially.

The boom is advantageously mounted on the pedestal free end at such a position along its - the boom's - length that in use the combination of boom, drives, drive connectors, manipulating apparatus and tool is approximately balanced.  In the preferred form discussed further hereinafter (using a number of relatively heavy electric motors as the prime movers for the drives) this requires the boom to be mounted at a point quite close to its aft (drives) end and distant from its fore (manipulator) end.

The boom is supported by two adjustable support struts mounted between two-axis joints on the boom and either side of the pedestal.  Each support strut is adjustable in length, and thus the boom may as required be caused to pitch in an up-and-down plane as both struts are made longer (up) or shorter (down) or in a side-to-side direction as one strut is made longer and the other is made shorter.  Naturally, by combining these two types of adjustment the boom can be caused to move in any direction within a spherical surface normal to its length - and by causing the pedestal itself to pitch in the fore-and-aft plane so the boom can be caused to move forwards and backwards as well.  Like the pedestal support prop, each boom support strut may be telescopic, driven perhaps by some form of pneumatic or hydraulic system, but more preferably (because it forms a more rigid, more controllable arrangement) it is a screw jack mechanism.  However, while the pedestal support prop is conveniently a simple screw jack of the type with a constant length threaded rod which screws into and out of a non-rotating socket at one end so as to alter the length of the portion between the socket and the other end, each boom support strut is most preferably a screw jack of the type in which the socket rotates and the threaded rod does not; if the socket and the other end are secured to the pedestal and boom then each threaded rod becomes an adjustable strut the effective length of which can be changed as desired to cause the boom to move with any chosen combination of pitch in the up-and-down plane and yaw in the side-to-side plane. With such a screw jack adjustable strut it is convenient if for each strut the socket (which turns around the threaded rod) is mounted for rotation on a two-axis joint on the pedestal, the projecting free end of the rod extending generally to the rear, while the "fixed" end of the rod is pivotally and swivellably secured to a single, common, two-axis joint on the boom. Naturally, there is driving means associated with each adjustable strut. In order to keep the driven inertia of the actuator mechanism to a minimum, it is preferred that this driving means be mounted in effect in alignment with the strut's pedestal two-axis joint.

The support strut's two two-axis joints, one on the pedestal and the other on the boom, are naturally each spaced from the pedestal pitching-pivot axis in order that there should be sufficient movement to enable the strut to extend or contract, so pitching and/or yawing the boom, without the need to use excessive force. In each case the absolute spacing is dependent mostly upon the size of the mechanism, but the relative spacing is conveniently the same (and in fact the pitching axis for both joints is preferably common - indeed, most preferably this common axis is actually a common axle, so rigidly linking the two joints together as regards pitching) and is such that the two strut pivots are equidistant from the boom pitching/yawing pivot/swivel joint, and the pedestal strut joint is roughly halfway along the pedestal.

It will be observed that the actuator mechanism of the invention has a double tripod structure (the pedestal, having significant width, may be regarded as two spaced tripod legs). The mechanism may, therefore, be defined alternatively as an actuator mechanism for a robot, which mechanism comprises:

a baseplate;

a first tripod structure having one adjustable leg and being mounted upon the baseplate via one-axis joints allowing the tripod to pitch forwards and backwards as the length of its one adjustable leg is changed; and

a second tripod structure having two adjustable legs and being mounted upon that side face of the first tripod structure opposed to the latter's one adjustable leg via two-axis joints allowing the second tripod both to pitch up and down and to swivel from side to side as the length of one or each of its two adjustable legs is changed.

The two front "legs" of the first tripod structure are combined in the previously-defined pedestal, and extend beyond the apex of the tripod. The two adjustable legs of the second tripod structure are the previously-defined adjustable support struts while the third leg of that tripod structure is the previously-defined boom, which extends beyond the apex of this tripod; this second tripod structure is mounted on the front "face" of the first – thus, on either side of the pedestal and on the free (extended) end thereof.

As will be fully understood, it is the double tripod-like nature of the actuator mechanism of the invention that provides it with its desirable properties of stiffness, and so on.

The pedestal support prop and both of the boom support struts used in the actuator mechanism of the invention are each driven by some primary drive system suited to their nature. In the case of the preferred screw jack devices the primary drive is in each case advantageously an electric motor appropriately coupled to the jacking mechanism. This type of drive arrangement is generally well known, and needs no further discussion here. However, it can be said that a particularly preferred arrangement is of the ball and screw variety; this type may be obtained in a form having a high degree of positional accuracy, a very small end float, a high efficiency, and a low wear rate - all characteristics needed for a precision robot actuator mechanism. It is true that ball and screw arrangements are rather slow, but the preferred mechanical construction of the actuator deals with this problem.

The inventive actuator mechanism is intended as part of the structure of a robot, and as such its operation will be controlled by an automatic device such as a computer - more specifically by that type of microcomputer commonly known as a microprocessor - which will regulate the activity of the various drive means in order to position in the correct plane and at the right time whatever tool the mechanism's boom is carrying. In order to do this, however, the controlling device will need feedback from the drives (and preferably from the adjustable support members themselves), so defining where the tool actually is. Thus, each adjustable support member is very desirably associated with length monitoring means capable of outputting a suitable signal to the controlling device, the totality of these signals allowing the controlling device to calculate the actual position of the tool. Computer controlled systems requiring this sort of feedback are in general now very well known, and there is no need here to provide any further details of either the controlling device or the feed-back arrangement.    Nevertheless, by way of example it may be said that a feedback arrangement for use with the preferred screw jack adjustable support members employs two angular position detectors mechanically connected to the  nut driving the screw of each adjustable member and outputting an electrical signal defining the position of the adjustable member.   One is a resolver capable of determining angular positions down to one thousandth of a revolution by the measurement of phase differences between input and output alternating currents, and is mechanically connected directly to the nut driving the screw, so that several revolutions of the resolver are given by the full travel of the adjustable member.  In order to determine which revolution the resolver is on, the second detector, in the form of a potentiometer, is connected through a suitable gear reduction to the drive shaft of the resolver.  The gear reduction chosen is in excess of the total number of turns of the nut, so that the potentiometer rotor completes just less than one revolution for the full travel of the adjustable member. The outputs from these two sensors are fed into a conventional digital electronic servo system using a microprocessor.  With these two simple devices a resolution of 0.02mm of screw travel can be achieved.

It is also useful here to note that because the mechanism backlash and sloppiness can almost entirely be eliminated the monitoring of the tool position can be effected by monitoring the support member's positions rather than the tool position itself.   Accordingly, the structure of the preferred embodiments of the inventive actuator mechanism allows very precise control of tool position with relatively rough monitoring of support member length, and it will be appreciated that in this respect the inventive mechanism is considerably superior to the more conventional devices presently available.

The inventive actuator mechanism provides a solid, controllable "platform" suitable as the basis for robots of many types. The "platform" itself is constituted by a base, a pedestal mounted on the base to pitch forwards and backwards, and a boom mounted on the pedestal to pitch up and down and yaw from side to side. It will be seen that any tool carried on the free end of the boom can, for any single pedestal position, be moved anywhere within a portion of a spherical surface defined by the length of the boom (the radius - say, 1 to 2 metres) and the chosen arrangement of boom support struts (the solid angle subtended by the surface position; as an example, the boom could well move $60^{\circ}$ either side of a "straight ahead" position, and $40^{\circ}$ above and below a "horizontal" position). It will also be seen that, by altering the position of the pedestal - by pitching it forwards and backwards - this spherical surface portion can also be moved forwards and backwards, so giving the tool a working depth (possibly up to 1 metre from front to back).

The inventive actuator mechanism can be incorporated into a wide variety of robots for performing one or more of a multitude of tasks. It may therefore carry (at the free end of the boom) any suitable manipulator apparatus, and in turn that apparatus can manipulate whatever tool is appropriate to the work to be done (spraying, welding, doing up nuts-and-bolts, and so forth). However, it has been expressly designed with one particular type of manipulator apparatus in mind, and an aspect of such an apparatus will now be described in more detail.

The manipulator apparatus for a robot commonly takes the form of a tool-carrying portion (a grasping, pincer, hand-like device, perhaps, or merely a slot or hole in which the tool may be lodged) supported by an arm-like member via a complex joint or series of joints comparable to a human wrist. The present invention provides a novel form of wrist-jointed manipulator apparatus upon which a tool can be mounted and which is particularly suited to use with the actuator mechanism of the invention.

Accordingly, in a second aspect this invention provides a wrist-like 3-axis joint arrangement suitable for use in the manipulator apparatus of a robot having an arm-like boom, the arrangement comprising:

a first, or forearm, portion mountable upon the robot's boom for rotation about a first axis;

a second, or hand, portion mounted on the forearm for pivotal movement in a plane coplanar with the forearm's rotational axis and about a second axis normal to and intersecting the forearm's rotational axis; and

a third, or tool-carrier, portion mounted on the hand for rotation about a third axis normal to the hand's pivot axis and intersecting the forearm's rotational axis;

and wherein

all three axes intersect at a point, and the three portions are drivingly connected to drive members (themselves connectable to drive means whereby each portion may individually be driven around its movement axis), the drive members comprising a combination of inner, middle and outer drive shafts all co-axial with and rotatable about the forearm's rotational axis.

The invention provides a wrist-like joint arrangement having a rotatable forearm upon which is mounted a pivotable hand bearing a rotatable tool carrier.

The forearm - the first portion - is suitable for mounting upon the boom of an arm-like robot actuator mechanism as described herein.　The portion is mountable for rotation about a first axis, and it is convenient if that axis be the axis of the boom upon which the portion is to be mounted.　In a particularly preferred embodiment the boom is a circular cross section tube containing coaxially thereof the drive means (discussed further hereinafter) to which in use the drive members are connected, and the first portion is in effect a co-axial extension of its drive member.

Mounted on the first portion (the forearm) is the second portion (the hand).　The mounting enables the hand to pivot on the forearm about the second axis;　the pivot plane is coplanar with the forearm's rotational axis (the first axis), the pivot (second) axis being normal to and intersecting the forearm's rotational axis.　The mounting is conveniently a "conventional" one axis joint of the type wherein trunnions projecting from one member co-operate with journal bearings in the other;　in this case preferably the trunnions are the ends of an axle mounted within an eye projecting from the end "face" of the forearm, while the hand has a correspondingly bifurcated (U-shaped) end that fits over the eye, the pivot axle passing through bearings in one fork end, the eye, and bearings in the other fork end to hold the two portions together.

The tool-carrier - the third portion - is mounted upon the hand so that it can rotate about an axis (the third axis) normal to the hand's pivot axis and intersecting the forearm's rotational axis.　There is little of a general nature to say about this, save that, while the third portion might be likened to a human finger, it does in fact rotate on its axis (which is normal to the hand's pivot axis) rather than (as does a finger) pivot thereabout (a finger's pivot axis being parallel to the hand's pivot axis).

In addition, it may be noted that the tool carrier may be of any form suitable for carrying whatever tool is to be operated by the robot. In the specific embodiment described hereinafter with reference to the accompanying drawings the tool carrier is a simple shaft to which may be attached the tool.

In the joint arrangement of the invention all three axes - the forearm's rotational axis, the hand's pivot axis and the tool-carrier's rotational axis - intersect at a point. This is an important factor, which minimises the positional control problems to be solved by the program the robot is following.

The three portions are drivingly connected to drive members themselves connectable to drive means whereby each portion may individually be driven around its movement axis. The drive members are inner, middle and outer co-axial drive shafts; conveniently each shaft is a circular cross-section tube, the three tubes nesting one within the next, and in the preferred case where the robot's boom is a circular cross-section tube and the forearm is coaxial therewith then the three drive shafts are also coaxial with the boom and, advantageously, disposed at least partly therewithin. Most preferably the forearm is driven by the outer drive shaft, the hand by the middle and the tool carrier by the inner.

As is discussed further hereinafter, each drive member is drivingly connected to its own drive means; in the particularly preferred case each drive means is a drive connecting shaft corresponding to the relevant portion drive member drive shaft, and each drive member shaft is connected to its drive connecting shaft by a glued bond or tight friction fit.

The mechanism by which the three portions may be connected to their drive members (whereby they may individually be driven about their axes) is itself of some interest, and one particular version will now be discussed. Firstly, however, it must be pointed out that, while it might well be advantageous to arrange for any one portion (the hand, say) to be driven in such a way that its movement was wholly independent of, and had in its turn no effect upon, the movement of any other portion (the forearm, say), this desideratum is - as is explained in more detail hereinafter - not available with the connection mechanism to be described.

The forearm (first portion) is mounted for rotation about a first axis, and is drivingly connected to a drive member which is preferably the outer of the three drive shafts coaxial with the forearm's axis. The forearm is, in a sense, the simplest of the three portions. In the particular version described it is mounted coaxially of and directly upon its drive shaft, and so is rotated directly therewith, without any intervening gear system.

The hand (second portion) is mounted for pivotal movement about a second axis on the forearm, and is drivingly connected to a drive member which is preferably the middle of the three drive shafts coaxial with the forearm's axis. The hand's pivot axis (the second axis) is normal to the forearm's axis (the first axis), and to turn the drive from the middle drive shaft through the required $90^{\circ}$ it is passed from a bevel pinion secured at the end of the shaft (and coaxial therewith) to a co-operating bevel gear secured to the hand (and coaxial with the hand's pivot axis).

The tool carrier (third portion) is mounted for rotation about a third axis, and is drivingly connected to a drive member which is preferably the inner of the three drive shafts coaxial with the forearm's axis. The tool carrier's rotational axis is normal to the hand's pivot axis, and intersects both that axis and the forearm's rotational axis. The tool carrier's axis is, in a sense, a continuation of the forearm's axis - but to allow this to be so no matter what the pivotal state of the hand the drive for the tool carrier is first turned through 90$^{\circ}$ into a plane parallel with the hand's pivot plane and then turned back 90$^{\circ}$ onto the line of the tool carrier's axis (the third axis). In one particular form the first 90$^{\circ}$ turn is effected by a bevelled pinion secured at the end of the middle shaft (and coaxial therewith) co-operating with a bevel gear mounted for rotation about the hand's pivot axis, and the drive from this bevel gear is transferred to a second bevel gear on an axis parallel to and spaced from (towards the tool carrier end of the hand) the hand's pivot axis / co-operating with a second bevel pinion secured to (and coaxial with) the tool carrier itself. The transference of drive from the first to the second bevel gear is conveniently effected using a chain linking two sprocket wheels (one secured coaxially with either bevel gear); this renders relatively simple dealing with backlash problems.

A consideration of the first described driving connections between each of the portions and its driving member will reveal that movement of the portions is not wholly independent. If, for example, the forearm is rotated about its axis, then there is relative movement between the forearm driving member and the hand and tool carrier driving members, and as a result there is corresponding pivoting movement of the hand and there is also corresponding rotational movement of the tool carrier (though this latter is opposite to the forearm rotational movement). Indeed, if there is relative movement between any one of the drive members and any other, then there is corresponding relative movement of the appropriate driven portion. It is therefore necessary, when driving the joint arrangement so that any tool carried thereby is moved to the

- 17 -

0084249

chosen position, to allow for the linked nature of movement of any one position/member with movement of the others.

The wrist-like 3-axis joint arrangement of this invention comprises forearm, hand and tool-carrier portions each driven by drive members in the form of drive shafts coaxial with the forearm's axis. These drive shafts are themselves individually connectable to drive means in the form of drive connecting shafts, and ultimately they are connectable via these (and possibly other) drive means to a prime moving device (such as a motor), the combination of drive means and motor constituting a drive package. Such a drive package is now discussed in more detail.

When employing an arm-like actuator mechanism for a robot it is generally desirable that the various prime movers - the motors, and so on - involved in driving both the mechanism itself into any of the available positions and any manipulator apparatus carried by the mechanism should be mounted away from that end of the mechanism carrying the tool (or other device) that the robot is to operate. The reasons are two-fold. Firstly, it is very much preferred that the tool-carrying end of the actuator mechanism be as small and compact as possible, so that it can be manoeuvred into relatively small spaces, and there effect the programmed work. Secondly, in order to ease the problems of accurate physical control over the position of the tool, it is extremely advantageous if the prime movers need not be carried about with the tool-carrying end but either be stationary relative to the mechanism's mounting or, if carried by the mechanism, be in such a position that the mechanism as a whole is in a generally balanced state. The actuator mechanism of the invention has a long boom (the lower arm portion) pivotally and swivellably mounted upon a pedestal (the upper arm portion). It is intended that there should be carried at one end of the boom some sort of manipulator apparatus, preferably incorporating a wrist-like 3-axis joint arrangement of the invention, and that there should be carried at the other end of the boom (such that the boom and its attachments are overall in a generally balanced state) the prime movers for driving the manipulator apparatus. Thus, in one preferred embodiment of the invention the actuator mechanism itself has its own prime movers mounted upon its baseplate, and carries at one end of its boom the prime movers for any manipulator apparatus attached at the other end of the boom.

One aspect of the present invention has been a wrist-like 3-axis joint arrangement comprising forearm, hand and tool-carrier portions each driven by drive members in the form of drive shafts coaxial with the forearm's axis and individually connectable to drive means each connectable in turn to a prime moving device (such as a motor).

A preferred embodiment of this aspect is one wherein the drive means are themselves coaxial drive shafts, and are intended for mounting within and coaxial of the arm-like boom of a robot, being driven by prime movers to be mounted at that end of the boom spaced from the manipulator apparatus carrying end. Such a drive package (of coaxial shafts and prime movers) comprises a framework secured to the rear end of the arm-like boom and upon which are mounted, coaxially with and drivingly connected one each to the ends of the drive connecting shafts, three independent adjacent drive wheels, there being also mounted upon the framework three independent prime movers drivingly connected one each to the drive wheels.

The basic mechanical principles behind the drive package are conventional, though their application in this particular manner may well be novel.

The framework may be any rigid structure that can be secured to the rear end of the boom and that can satisfactorily carry the drive wheels, the prime movers therefor, and any interconnecting linkages.

The drive wheels are most conveniently worm wheels, driven by a worm itself driven by the prime mover (conveniently via a toothed belt meshing with a pinion directly connected to the prime mover and a correspondingly toothed pulley wheel directly connected to the worm). The use of worm-and-wheel combinations in this manner allows the employment of high gear ratios (in a small space), resulting ultimately in precise control of the manipulator position without any possibility of significant back drive (it is a characteristic of worm-and-wheel combinations that the worm can drive the wheel but the wheel cannot drive the worm).

The prime movers can be any sort of motor, but most conveniently they are electric motors.

The motors, via the drive wheels, driving connecting shafts, and wrist-like joint, drive into position the manipulator apparatus carried at the "working end" of the robot's arm-like boom.  Naturally, it is desirable for the mechanism as a whole to include means whereby the actual position of the manipulator apparatus may be measured and fed back to the primary control device (the microprocessor, say) operating the robot.  Only in this way can the control device "know" whether the robot is correctly obeying its instructions.  On many robots the feed-back signals are derived from position sensors placed right at the manipulator end - in this way the inaccuracies of any physical linkages during the manipulation are ignored, for the feedback signals relate closely to where the manipulator actually is - and such a system may be used with the equipment of the present invention.  However, the invention's equipment (the actuator and the joint arrangement) is inherently both structurally and servomechanically stiff - that is, there need be no significant play, or looseness, anywhere in the system between the drive end and the working end. This is particularly so of the inventive joint arrangement and its drive package;  there need be no significant looseness in the linkages between the prime mover and the various joint components.   Accordingly, it is possible, and convenient, to obtain manipulator positional feed-back signals from sensors actually mounted within the drive package.   The sensors may be mounted on the worms (of the preferred worm-and-wheel drive wheels), and indeed it is convenient if there be two sensors to each worm, one - for "fine" control - driven directly via an axial extension of the worm and a second - for "coarse" control - driven indirectly by a further wheel itself driven directly by the worm (and preferably by a portion of the worm spindle that is not used to drive the drive shaft drive wheel, and that has a worm thread of different - finer - pitch). Such a sensor arrangement is described hereinafter with reference to the accompanying drawings.

Various embodiments of the aspects of the invention are now described, though only by way of illustration, with reference to the accompanying drawings, in which:

Figure 1 shows a perspective view of the mechanical parts of a robot welding device, incorporating an actuator mechanism, manipulator apparatus and manipulator drive arrangement of the invention;

Figure 2 shows a side elevation of a welding device like that of Figure 1;

Figure 3 shows a top plan view of a welding device like that of Figure 1;

Figure 4 shows a perspective external view of a joint arrangement of the invention as mounted upon the boom of a robot device like that of Figure 1;

Figure 5 shows an axial cross-sectional view of the joint of Figure 4 (the section is in the plane of the hand pivot axis, with the joint fully aligned);

Figures 6A, B and C show selected parts of the joint as seen in Figure 5;

Figure 7 shows in diagrammatic form an axial cross-section through a robot boom bearing at one end a wrist-like joint of the invention (as shown in Figures 5 and 6A, B and C) and at the other end a drive package;

Figure 8 shows an axial cross-section through a drive package as shown diagrammatically in Figure 7;

Figure 8A is a trans-axial cross-section on the line A-A in Figure 8;

Figures 9 and 9A are, like Figures 8 and 8A, axial and transaxial cross-sections, but showing only the outer drive system (comparable to Figure 6A);

Figures 10 and 10A are like Figures 9 and 9A, but showing only the middle drive system (comparable to Figure 6B); and

Figures 11 and 11A are also like Figures 9 and 9A, but showing only the inner drive system (comparable to Figure 6C).

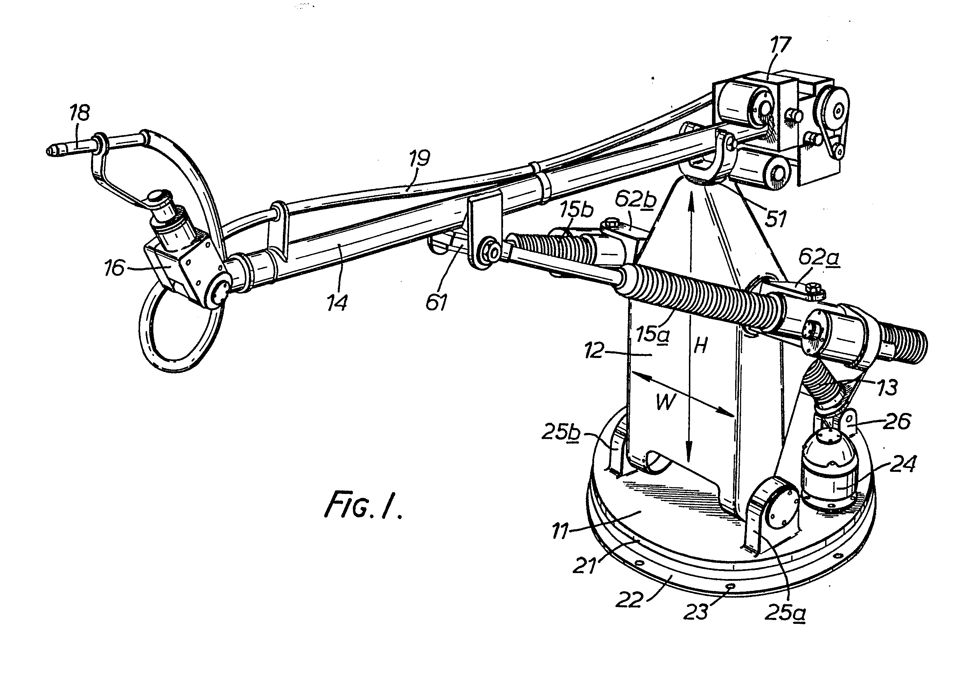

The actuator mechanism of the robot shown in Figures 1,2 and 3 comprises in essence a baseplate (generally 11) carrying a pedestal (generally 12) supported by an adjustable support prop (generally 13), the pedestal itself carrying a boom (generally 14) supported by two adjustable support struts (generally 15a, b). At one end of the boom 14 is a manipulator apparatus (generally 16) having a wrist-like joint arrangement, while at the other is the drive system (generally 17) for operating the manipulator mechanism 16. In Figure 1 (only) the latter is shown bearing a welding rod (18) attached by a cable (19) to a power supply (not shown).

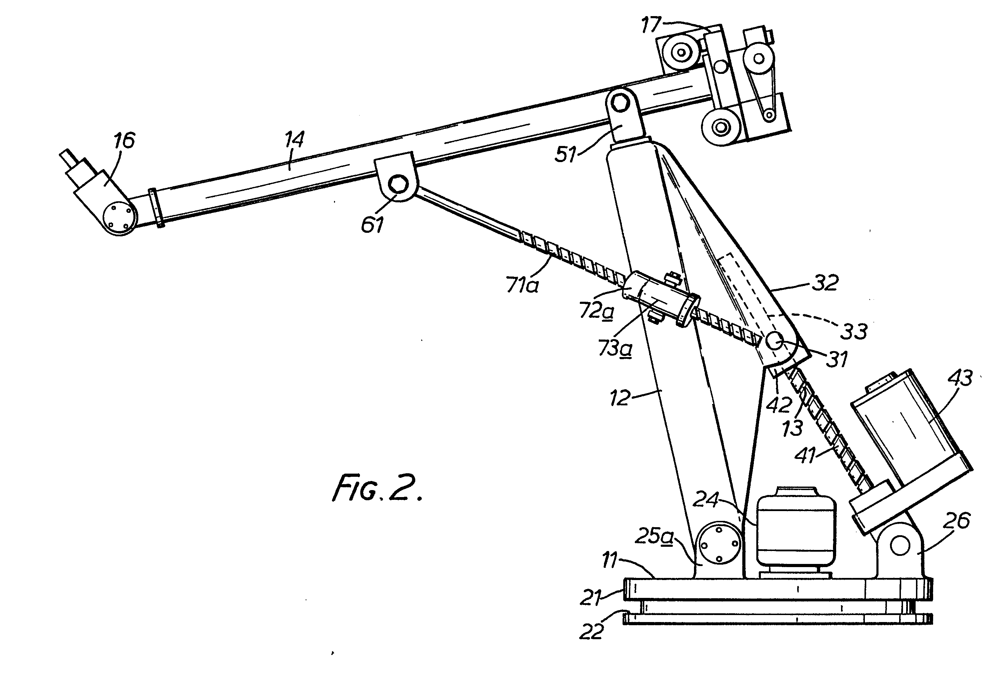

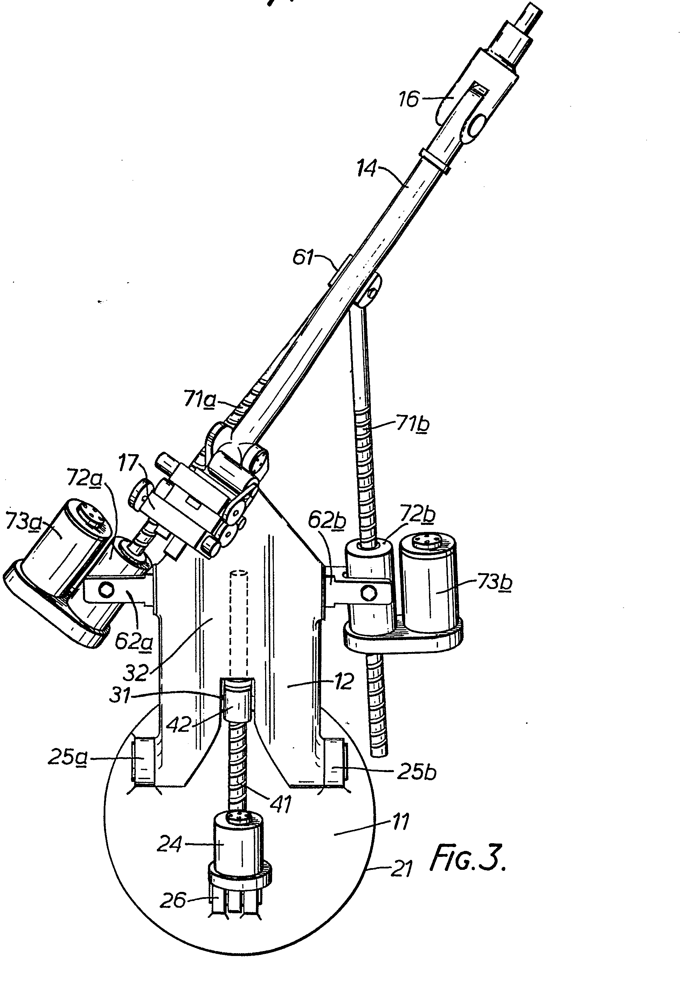

In Figure 1 the adjustable support members 13,15a,b are shown in part surrounded by concertina gaiters (to keep dirt out of the working parts). In Figures 2 and 3, however, the members are shown without the gaiters.

Though it is not clearly shown in Figures 1 to 3, the baseplate 11 is in two sections, an upper (21) and a lower (22); the lower section 22 has a rim pierced with bolt holes (as 23), whereby it may be mounted to the floor (or to some other supporting structure), while the upper section 21 is mounted on the lower by a bearing system (not shown) allowing it to rotate about an axis central of and normal to the plane of the lower section 22. The upper section 21 may be driven around on the lower section 22 between end stops (not shown) by an electric motor (24) co-operating with suitable drive gear (not shown) disposed between the two sections.

Upon the upper surface of the upper section 21 are mounted (integrally therewith) parts of three pivot joints (25a,b and 26)(the remaining part of each joint is, of course, formed in or mounted on the pedestal 12 or adjustable support prop 13 respectively); the joints have their pivot axes parallel, and joints 25a and b are disposed either side of the pedestal 12 while joint 26 is to the rear thereof (the spacing is such that they define the apices of an isosceles triangle - which is in fact nearly equilateral - having the pedestal joints on its base).

The pedestal 12 consists of a single slab-shaped unit having a peaked top. It has significant width (W) relative to its height (H), and with its two baseplate pivots 25a,b mounted at either side it resembles mechanically two tripod legs (the third is the support prop 13). Thus, the combination of pedestal 12 and support prop 13 has excellent stability and mechanical stiffness.

As best seen from Figures 2 and 3 the pedestal support prop 13 is connected between the pedestal 12 and the baseplate 11 via two pivot joints one (26) on the baseplate and the other (31) on the rear surface of the pedestal. The pedestal-borne joint 31 is roughly mid-way along the length of the pedestal (and mid-way laterally thereof, as well), but is spaced rearwardly of the pedestal by a protruding spine (32) extending centrally along the length of the pedestal. This spine 32 is hollow, and the upper end (as viewed: 33) of the support prop 13 extends past the joint 31 and into the interior of the spine.

The adjustable support prop 13 is a screw jack of the type in which a threaded rod (41 in Figures 2 and 3) rotatably attached at one end to a fixed platform (11) is screwed in to or out of a mating nut member (42) towards the other end (33). In this particular case the nut member 42 is mounted upon the pivot joint 31, the one end is secured (via the workings of an electric-motor-powered drive means 43) to the pivot joint 26, and as the rod 41 is screwed into or out of the nut member 42 so the pedestal 12 is caused to pitch backwards or forwards.

At the free end (the top as viewed) of the pedestal 12 is mounted the boom 14 via a two-axis joint 51. The boom is a rigid, inextensible, untwistable tube; it carries the wrist-like manipulator apparatus 16 at one end, the drive system therefore at the other, and the links between the two (a series of coaxial tubes not shown in Figures 1 to 3) inside itself.  The boom is mounted via the joint 51 at a position along its length such that it is roughly balanced (thus reducing the force needed to support it and move it about), and in this particular case the swivel axis of the joint 51 is aligned with the long axis of the pedestal.

The boom 14 is supported by two adjustable support struts 15a/b.   Each of these is connected between a single, common two-axis joint (61), roughly mid-way between the boom/pedestal joint 51 and the manipulator end of the boom, and one of two two-axis joints (62a,b), each of which is roughly mid-way along the pedestal.  The boom/support strut joint 61 is a two-axis version of the single point three-axis joint described and claimed in the Specification of our copending published British Patent Application No. 2,086,980A (I/6480/MB).          Each of the support strut/pedestal joints 62a,b is a conventional two-axis joint, but one axis (the pitch axis) of both is common, and indeed there is a common pitch axle (not shown) rigidly linking the two joints together in pitching mode.

Each adjustable support strut 15a,b is a screw jack of the kind in which a non-rotating threaded rod (71a,b in Figures 2 and 3) mounted at one end on the object to be jacked is moved back and forth by a rotating mating nut element (not separately shown) rotably mounted at the other end within a fixed nut holder (72a,b).   In this particular case the nut member is within the workings of an electric-motor-powered drive means 73a,b - the nut holder 72a,b is part of this - which is itself mounted upon the two-axis joint 61a,b, and the one end of the threaded rod 71a,b is fixed to the boom 14 via the single, common two-axis joint 61.  As each nut member is rotated to drive its threaded rod back and forth, so the effective length of that support strut (the length between the boom two-axis joint and the pedestal two-axis joint) varies, and thus the boom is caused to pitch up and down and/or yaw from side to side as required.

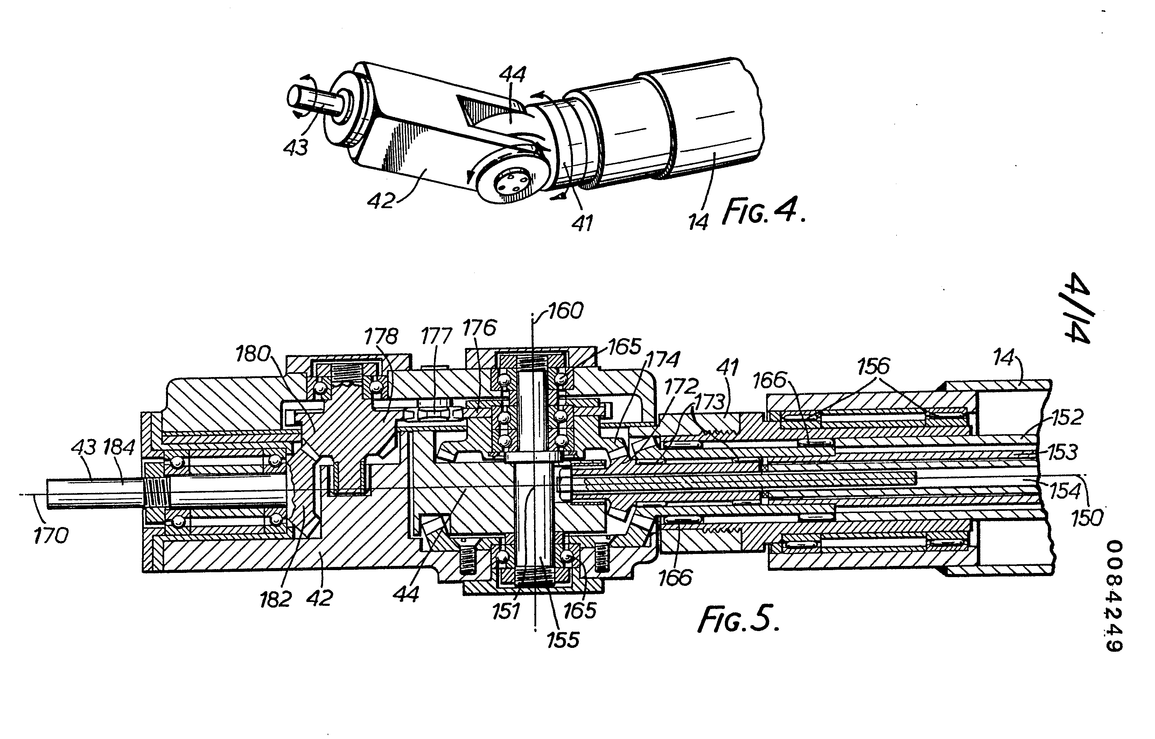

The view of Figure 4 shows the general external appearance of a wrist-like 3-axis joint arrangement of the invention when mounted in place upon the boom of, say, a robot of the type depicted in Figure 1. The internal components are discussed further below; here it is sufficient to say that the joint comprises a first, forearm, portion (41), a second, hand, portion (42) and a third, tool carrier, portion (43). The forearm 41 is mounted at one end coaxially of the robot's arm-like boom 14, and the other end of the forearm is shaped as an eye (44) and has mounted at either side thereof the bifurcated end of the hand 42. Projecting from the other end of the hand is the tool carrier portion 43.

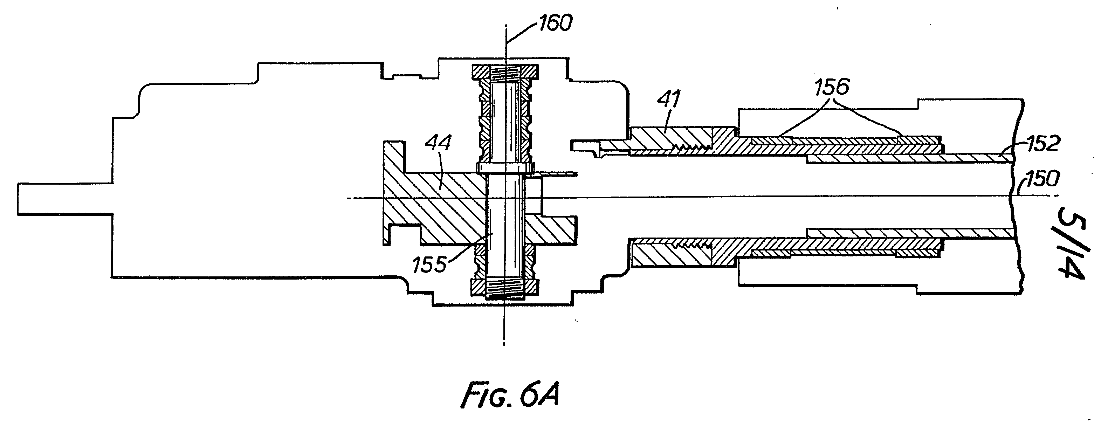

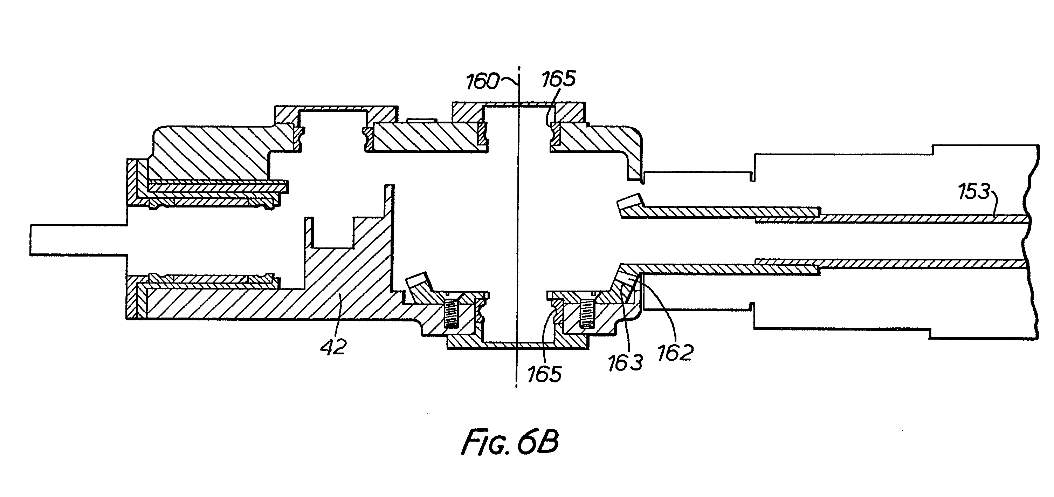

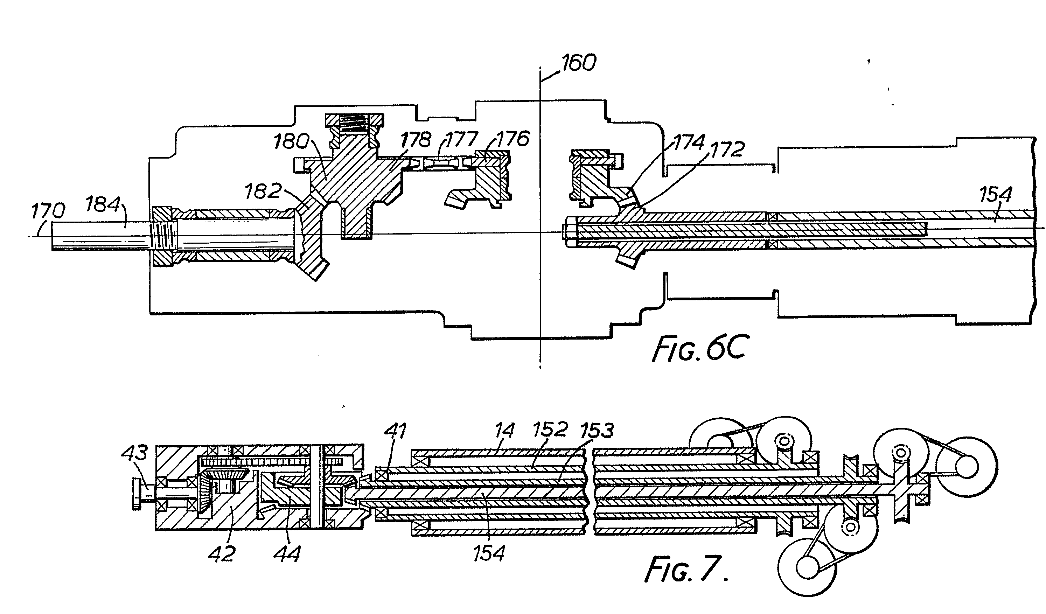

The internal workings of the joint arrangement of Figure 4 are shown in Figures 5 and 6A, B and C (in the latter three cases there are shown selectively those parts of one of the main components and its drive - the forearm 41 in Figure 6A, the hand 42 in Figure 6B, and the tool carrier 43 in Figure 6C).

As can be seen from Figures 4,5 and 6A, B and C the mechanism is in the form of a wrist having three axes of rotation. These axes are: (a) for rotation about the main axis of the supporting boom 14 (150); (b) for pivotting about an axis at right angles to the boom axis (160); and (c) for rotation about an axis at right angles to the tilt axis (170).

In order to simplify the programming of the microprocessor controlling the mechanism all the axes pass through a single point (151). Moreover, so that the wrist mechanism 16 should penetrate work pieces without requiring large access holes, the drives causing the mechanism to rotate or pivot about the three axes should be grouped well away from the wrist, and the connecting means should take up the least possible space. The solution shown in these (and subsequent) drawings is to support the wrist mechanism 14 on the end of a tubular boom 16, running the three connecting shafts (152,153,154) concentrically through the tube.

In Figures 5 and 6A there are shown the forearm portion 41 constituents (the means for rotating the wrist about the boom axis), driven by the outer (152) of the three drive shafts, and connected directly to a spindle (155) within the middle section of the pivot joint upon which the hand portion is mounted. The whole of the wrist assembly is then rotatable about the main (or first) axis (150). Needle bearings (156) contained in the end of the boom tube locate the whole wrist assembly (the location along the axis is maintained from the drive end).

In Figures 5 and 6B there can be seen how the drive to the hand portion's (42) pivot axis (160) comes from the motor by a second hollow shaft (153) concentric with the first to a bevel pinion (162) which meshes with a larger bevel gear (163) fixed to the hand portion 42. A ratio of 2.75:1 has been chosen for the bevel gear, since such a ratio both reduces wind-up in the drive shafts, so reducing positional errors, and since the small size of the pinion eases assembly procedures. The hand portion is located by ball bearings (165) onto the spindle fixed to the centre section. The bevel pinion is supported by a pair of needle roller bearings (166 - not shown in Figure 6B) within the shaft assembly of the forearm portion drive (location along the axis is again at the motor end).

Figures 5 and 6C show the tool-carrier portion driver. This comes from the drive motor by the third shaft 154 to a second bevel pinion (172) having the same cone angle as the hand pivot pinion 162. The second bevel pinion 172 is supported by needle bearings (173), and meshes with a similar, but smaller bevel wheel (174) on the opposite side of the hand pivot spindle 155 to the pivot drive (wheel 163). From the bevel wheel 174 the drive is taken through a sprocket and chain drive (176,177,178) to a further 1:1 ratio bevel wheel (180) and pinion (182) assembly to connect with the tool-carrier output shaft (184). The output shaft axis (170) also passes through the common point for all the axes. This configuration has been chosen since it is essential that the drive must first pass along/the hand pivot axis 160, otherwise the connection would be lost when the hand portion is rotated.   Having moved away from the centre line, the drive needs to be brought back, and this is achieved by the second pair of bevels 180,182.   Since there are two drives emerging from the centre section, the means of enclosing the whole of the moving parts has to be by way of the side faces of the centre section (the emergence of the final drive from the periphery of the centre section would have prevented adequate sealing). The chain drive 176,177,178 is used since it provides a means of backlash adjustment by means of a jockey slipper (such adjustment could not be obtained by gears without elaborate centre distance adjustment).

The use of concentric drive shafts, although convenient from the packaging point of view, presents problems in shaft location, since the shaft to gear fixings cannot allow any backlash.   Radial space also presents problems, and prevents the use of conventional splines and nuts, etc. The solution has been to use needle bearings of thin radial section in pairs at the forearm end, and to fix the various bevel gears to the hand ends of their concentric shafts with adhesives.   This requires that each shaft assembly must enter the boom from the wrist end (the means of connection at the motor drive end must therefore not exceed the bore size of the supporting needle bearings). The use of drive shafts fixed by adhesive into their respective gears/sleeves overcomes this problem.   While needle bearings do not give axial location, this is provided at the motor drive end, where ball bearings with no end float can be positioned without the radial size restrictions (the three drive shafts will be made of the same material to prevent differential expansion).   It is of course essential that the backlash in all the drives is kept to a minimum, and therefore means of adjustment is provided at each of the bevel gears as well as the chain drive.

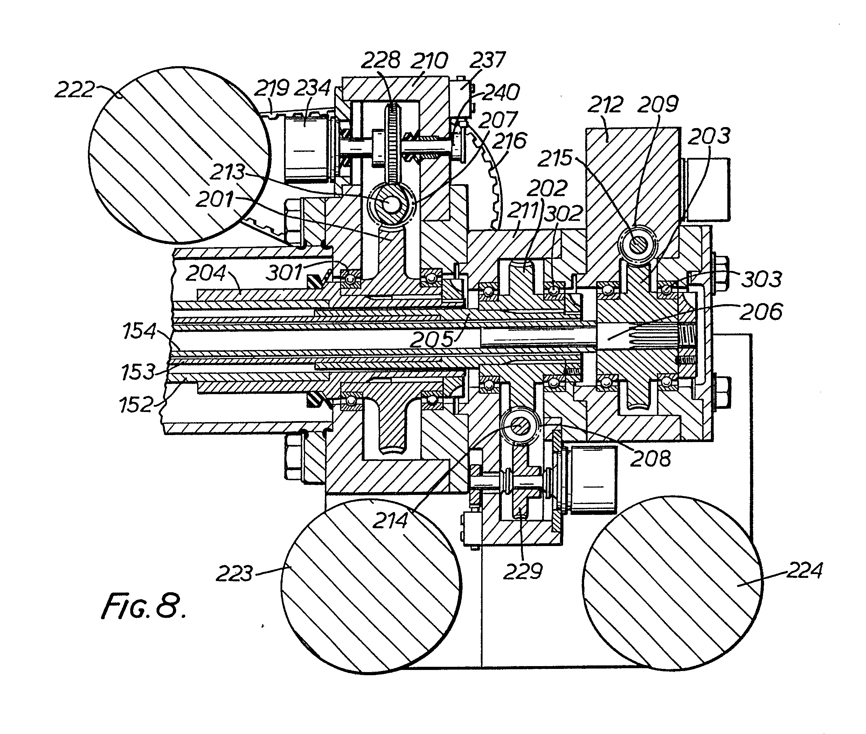

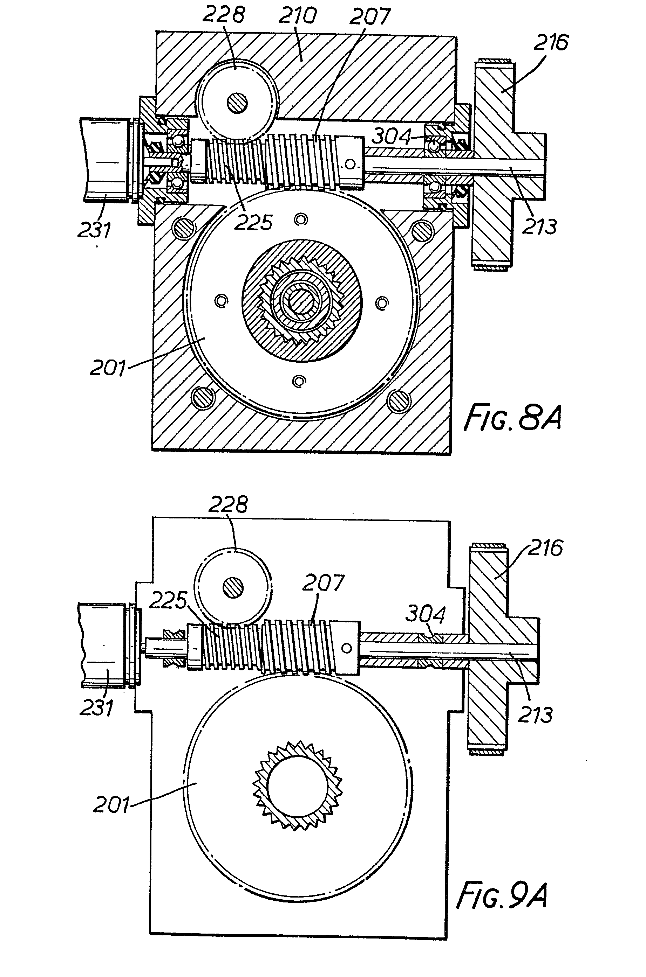

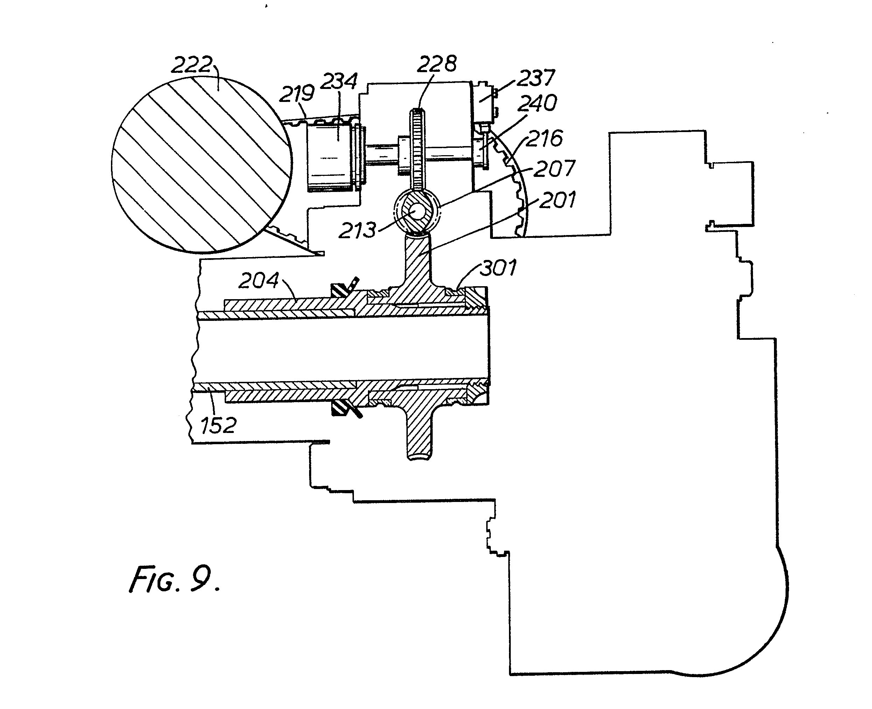

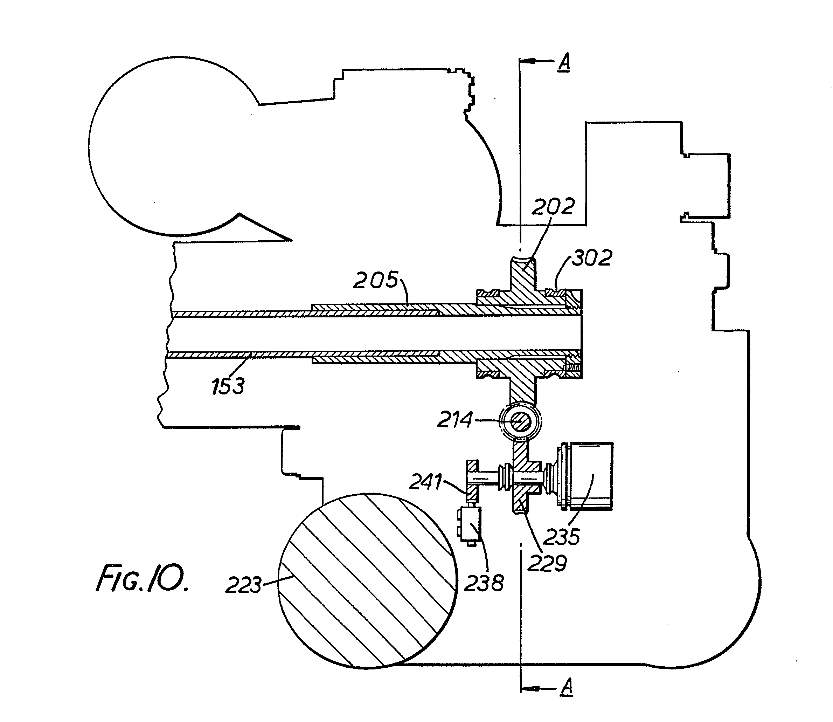

The general manner in which the wrist-like joint arrangement is constructed, in which its drive package is constructed, and in which the two are operatively connected together by the drive connecting shafts is shown diagrammatically in Figure 7. The details of the wrist-like joint arrangement have already been described with reference to Figures 4,5 and 6A,B and C; the details of the drive package are now described with reference to Figures 8 (and 8A) to 11 (and 11A).

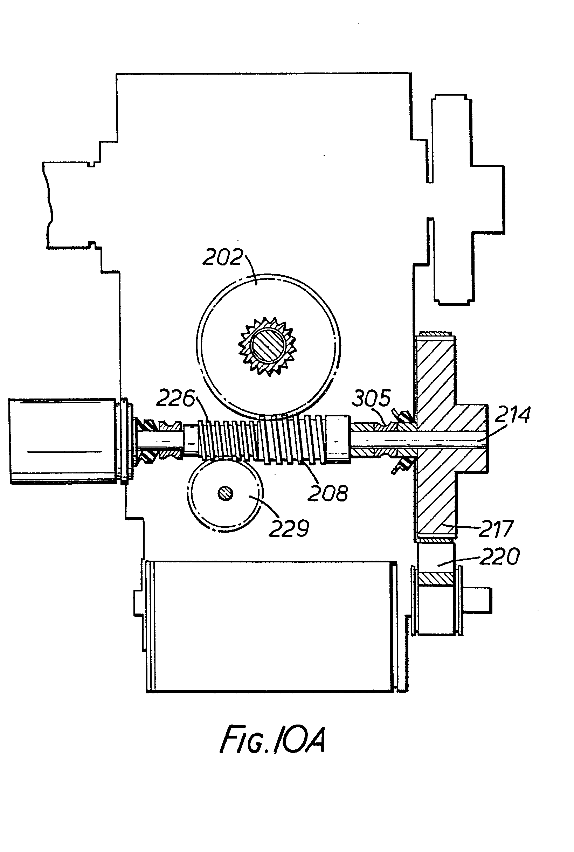

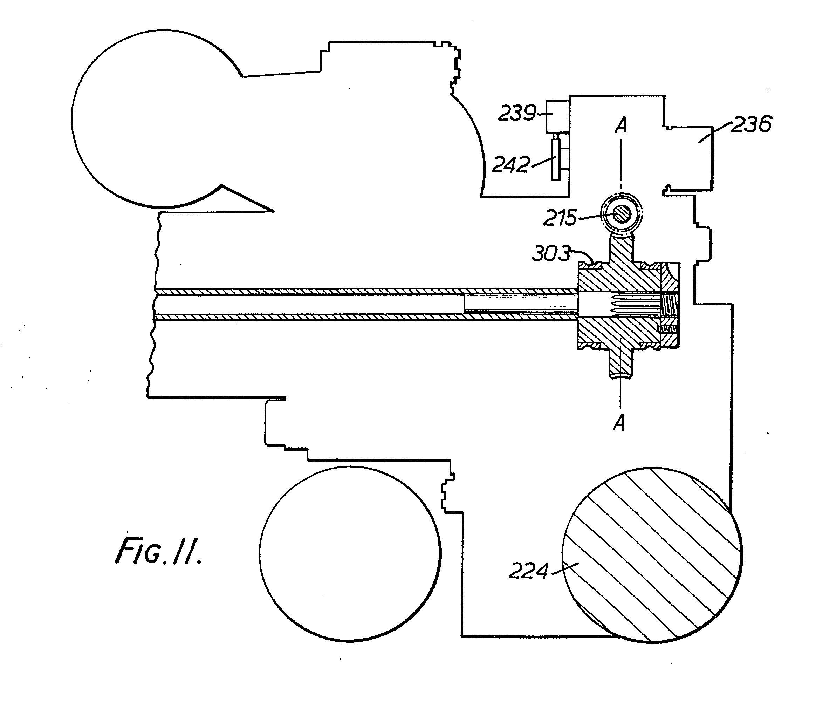

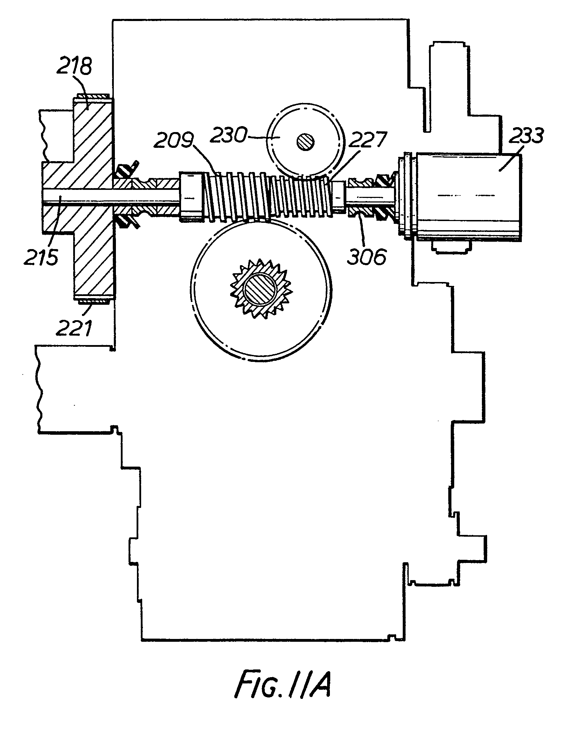

The drive package consists of three similar electric motors/gearbox combinations (shown separately in Figures 9/9A-11/11A) with the gearboxes bolted together to form a complete enclosure. Each gearbox drives one of the shafts leading to the wrist mechanism, and since the shafts are located concentrically the gearbox (Figure 9/9A) nearest the wrist drives the outer shaft 52, the central gearbox (Figure 10/10A) the shaft in between 153 and the outer gearbox (Figure 11/11A) the centre shaft 154. In order to assemble the shafts together the maximum diameter of any part of each shaft must not exceed the bore diameter of the needle rollers of the bearing supporting it at the wrist end. The difficulty has been overcome by attaching to the drive end of each shaft a splined coupling (204, 205,206) of limited outside diameter for attachment to worm gears (201,202,203).

The worm gears and the worms (207,208,209) are contained each within their own casing (210,211,212) being supported by ball bearings (as 301,302,303) in the side walls. These bearings can be adjusted in axial position to eliminate end float and also to locate the bevel gears (162,172) in the wrist so that all backlash is eliminated. The worms are driven by shafts (213,214,215) at right angles to and offset from the splined gear shafts, and are supported by ball bearings (as 304,305,306) contained in housings which permit the radial adjustment of position to eliminate backlash between worms and wheels. The worm shafts are driven by toothed belt (219,220,221) and pulley (216,217,218) systems of 3:1 ratio from electric motors (222,223,224) situated alongside the gearbox casings.

The position of the wrist components is given by sensors of similar type as those employed to signal the position of the adjustable support members, with resolvers (231,232, 233) connected to the worm shafts. Second worms (225,226, 227) of smaller proportions than those for the drives couple with wheels (228,229,230) which drive potentiometers (234,235,236) and also cams (240,241,242) for the activation of micro switches (237,238,239) to operate at the ends of travel.

Although the construction of the three gearboxes is similar, the gear ratios and torques to be transmitted differ in as much as the drive to the forearm is direct and that to the hand and tool carrier contains gear reductions of 2.75:1 ratio. The worm to gear ratios are therefore 40:1 ratio for the forearm and 10:1 ratio for both the hand and tool carrier, these being the most suitable for both speed and torque capacity.

CLAIMS:

1.    An arm-like actuator mechanism for a robot, characterised in that it comprises:

a baseplate (or "body" mounting, 21);

a pedestal (or upper arm portion, 12) pivotally mounted (by a "shoulder" joint, 25a,b) on the baseplate for fore and aft pitching movement, and means for so moving it incorporating an adjustable support prop (13) mounted to the rear of the pedestal and extending between a joint (31) on the pedestal and a joint (26) on the baseplate; and

a boom (or lower arm portion 14) pivotally and swivellably mounted (by an "elbow" joint 51) at the free end of the pedestal for up and down pitching movement and side to side yawing movement, and means for so moving it incorporating two adjustable support struts (15a,b) mounted one either side of the pedestal and each extending between a two-axis joint (61) on the boom and a two-axis joint (62a,b) on the side of the pedestal.

2.    A mechanism as claimed in claim 1, wherein the baseplate is itself mounted (22,23) for rotary movement about an axis normal to the plane of the baseplate, and wherein the baseplate is mounted for rotation between end stops, and has associated drive means (24) for causing it so to rotate as and when required.

3.    A mechanism as claimed in any of the preceding claims, wherein the boom-carrying upper-arm-like pedestal is a single rigid inextensible pillar-like member (12) having significant width (the dimension in a direction normal to the pedestal's pitching plane) pivotally mounted (25a,b) at its end upon the baseplate for pitching movement in a fore-and-aft plane, and wherein the pedestal has the relevant portions of two pivot joints (62a,b) positioned spaced across its width, one on either side at the end.

4.    A mechanism as claimed in any of the preceding claims, wherein the support prop (13) is a screw jack mechanism of the type with a constant length threaded rod (41) which turns about its long axis so as to screw into and out of a stationary (non-rotating) socket (42) at one end and thus alter the length of the portion between the socket and the other end, the socket and the other end being secured respectively to the pedestal and baseplate, and wherein the screw jack socket (into which the threaded rod screws) is pivotally mounted on the pedestal, the projecting free end of the rod extending into a recess within the pedestal, while the "fixed" end of the rod is rotatably secured to the pivot joint (26) on the baseplate.

5.    A mechanism as claimed in any of the preceding claims, wherein the relative spacing of the support prop's two pivot joints (31,26), one on the pedestal and the other on the baseplate, is such that the two prop pivots are equidistant from the pedestal pitching pivot joint (25a,b), and the pedestal prop pivot (31) is roughly halfway along the pedestal, and wherein the pedestal prop's pivot axis is considerably offset to the rear, so that the line joining the pedestal's prop and pitching joint axes is at 20° to 30° to the line of the pedestal itself.

6.    A mechanism as claimed in any of the preceding claims, wherein each boom support strut (15a,b) is a a screw jack mechanism of the type with a non-rotating threaded rod (71a,b) which is screwed into and out of a rotating socket (72a,b) at one end so as to alter the length of the portion between the socket and the other end, and wherein for each strut the socket (which turns around the threaded rod) is mounted for rotation on a two-axis joint (62a,b) on the pedestal, the projecting free end of the rod extending generally to the rear, while the "fixed" end of the rod is pivotally and swivellably secured to a single, common, two-axis joint (61) on the boom.

7. A mechanism as claimed in any of the preceding claims, wherein the relative spacing of each support strut's two two-axis joints, one (62a,b) on the pedestal and the other (61) on the boom, is such that the two strut pivots are equidistant from the boom pitching/yawing pivot/swivel joint (51), and the pedestal strut joint is roughly halfway along the pedestal.

8. A mechanism as claimed in any of the preceding claims, wherein the pitching axis for both joints' support struts' two-axis joints (62a,b) is common, and this common axis is actually a common axle, so rigidly linking the two joints together as regards pitching.

9. A mechanism as claimed in any of the preceding claims, wherein each adjustable support member is associated with one or more length monitoring means capable of outputting a suitable signal representing that member's effective length.

10. A wrist-like 3-axis joint arrangement suitable for use in the manipulator apparatus of a robot having an arm-like boom, characterised in that it comprises:

a first, or forearm, portion (41) mountable upon the robot's boom (14) for rotation about a first axis (150);

a second, or hand, portion (42) mounted on the forearm for pivotal movement in a plane coplanar with the forearm's rotational axis and about a second axis (160) normal to and intersecting the forearm's rotational axis, and wherein the mounting of the hand portion on the forearm portion is by a "conventional" one axis joint of the type wherein trunnions projecting from one member co-operate with journal bearings in the other, and the trunnions are the ends of an axle (155) mounted within an eye (44) projecting from the end "face" of the forearm, while the hand has a correspondingly bifurcated (U-shaped) end that fits over the eye, the pivot axles passing through bearings (165) in one fork end, the eye, and bearings (165) in the other fork end to hold the two portions together; and

a third, or tool-carrier, portion (43) mounted on the hand for rotation about a third axis (170) normal to the hand's pivot axis and intersecting the forearm's rotational axis;

and wherein:

all three axes intersect at a point (151), and the three portions are drivingly connected to drive members (themselves connectable to drive means (152,153,154) whereby each portion may individually be driven around its movement axis), the drive members comprising a combination of inner, middle and outer drive shafts all co-axial with and rotatable about the forearm's rotational axis; and

the hand's pivot axis (the second axis, 160) is normal to the forearm's axis (the first axis, 150), and to turn the hand's drive from its drive shaft through the required 90° it is passed from a bevel pinion (162) secured at the end of the shaft (and coaxial therewith) to a co-operating bevel gear (163) secured to the hand (and coaxial with the hand's pivot axis 160).

11. A joint arrangement as claimed in claim 10, wherein:

the three portions are drivingly connected to drive members which are inner, middle and outer co-axial drive shafts;

each shaft is a circular cross-section tube, the main tubes nesting one within the next; and

the robot's boom is a circular cross-section tube, the forearm portion is coaxial therewith, and the three drive shafts are also coaxial with the boom and disposed at least partly therewithin.

12. A joint arrangement as claimed in either of claims 10 and 11, wherein each drive member is drivingly connected to its own drive means (152,153, 154), each drive means is a drive connecting shaft (152,153,154) corresponding to the relevant portion drive member drive shaft, and each drive member drive shaft is connected to its drive connecting shaft by a glued bond or tight friction fit.

13. A joint arrangement as claimed in any of claims 10 to 12, wherein:

the forearm portion is drivingly connected to the outer of the three drive shafts coaxial with the forearm's axis, and is mounted coaxially of and directly upon its drive shaft, and so is rotated directly therewith, without any intervening gear system;

the hand portion is drivingly connected to a drive member which is the middle of the three drive shafts coaxial with the forearm's axis; and

the tool carrier portion is drivingly connected to a drive member which is the inner of the three drive shafts coaxial with the forearm's axis, and because the tool carrier's rotational axis (170) is normal to the hand's pivot axis (160), and intersects both that axis and the forearm's rotational axis (150), the drive for the tool carrier is first turned through $90^{\circ}$ into a plane parallel with the hand's pivot plane and then turned back $90^{\circ}$ onto the line of the tool carrier's axis (the third axis), the first $90^{\circ}$ turn being effected by a bevel pinion (172) secured at the end of the middle shaft (and coaxial therewith) co-operating with a bevel gear (174) mounted for rotation about the hand's pivot axis (160), and the drive from this bevel gear is transferred to a second bevel gear (180) on an axis parallel to and spaced from (towards the tool carrier end of the hand) the hand's pivot axis co-operating with a second bevel pinion (182) secured to (and coaxial with) the tool carrier itself, transference of drive from the first to the second bevel gear being effected using a chain (177) linking two sprocket wheels (176,178), one secured coaxially with either bevel gear.

*Fig. I.*

Fig. 2.

FIG.3.

FIG. 4.

FIG. 5.

*Fig. 6A*

*Fig. 6B*

0084249

FIG.6C

FIG.7.

Fig. 8.

0084249

*Fig. 8A*

*Fig. 9A*

0084249

Fig. 9.

FIG. 10.

FIG. IOA

0084249

FIG. 11.

FIG.11A